# EUROPÄISCHE PATENTSCHRIFT

(11) **EP 1 191 458 B1**
(45) Veröffentlichungstag und Bekanntmachung des Hinweises auf die Patenterteilung: **07.08.2002**
(21) Anmeldenummer: 00119944.7
(22) Anmeldetag: 13.09.2000
(51) Int. Cl.: G06F 17/30

(54) **Bidirektionale Verknüpfung eines Datenbanksystems mit einem Datenverzeichnis**
Bidirectional linking of database and file system
Association bidirectionale d'une base de données à un système de fichiers

(43) Veröffentlichungstag der Anmeldung: 27.03.2002
(73) Patentinhaber: OKS GmbH, 71394 Kerner (DE)
(72) Erfinder: Kretzschmar, Oliver, Dr., c/o OKS GmbH, 71394 Kernen (DE)
(74) Vertreter: Betten & Resch

(56) Entgegenhaltungen:
- WO-A-94/08310
- DE-A- 19 645 128
- US-A- 5 287 504
- US-A- 5 752 244
- US-A- 6 029 160
- US-A- 6 052 514

## Beschreibung

### GEBIET DER ERFINDUNG

Die vorliegende Erfindung betrifft ein Verfahren sowie ein Computerprogramm zur bidirektionalen Verknüpfung von Datenbanksystemen mit einem Datenverzeichnis.

### STAND DER TECHNIK

Die mehr und mehr zunehmenden Datenmengen im Bereich einer digitalen Produktion, z.B. die CAD-, CAM-, CIM-Branche, sowie der Medien-Branche mit Werbeagenturen, Druckereien, Druckvorstufen- und Repro-Betrieben usw. haben die Notwendigkeit von auftragsorientierten Mediendatenbanken unabdingbar gemacht.

Eine **auftragsorientierte Mediendatenbank,** oft auch Produktions-Mediendatenbank oder nur Produktionsdatenbank genannt, ist sehr vereinfacht ausgedrückt, die Weiterentwicklung einer klassischen Bild-Datenbank um die Möglichkeiten der ergänzenden Verwaltung von Texten und eventuell zusätzlicher MultiMedia-Datentypen. Die in die auftragsorientierten Medien-Datenbank aufgenommenen Texte und Bilder sind in der Regel im Gegensatz zu einer klassischen Medien-Datenbank in Aufträge untergliedert, welche wiederum einzelnen Kunden zugeordnet sind. Die Verwendung solcher auftragsorientierter Medien-Datenbanken findet demzufolge hauptsächlich in industriellen und gewerblichen Bereichen einer digitalen Produktion statt. Der Vorteil solcher auftragsorientierter Medien-Datenbanken, die vereinfacht ausgedrückt einen Spiegel auf ein dateisystem-basierendes Auftrags-Verzeichnis bzw. Ordner darstellt und diesen datenbanktechnisch repräsentiert, liegt darin, daß die eigentlich im Dateisystem vorzufindenden Dateien um sogenannte Metadaten ergänzt werden. Diese Metadaten können nicht nur auftrags- und kundenspezifische Daten sein, sondern z.B. auch Informationen der Betriebsdatenerfassung, z.B. wer hat wie lange was an welcher Datei bearbeitet oder Zustände über deren Verwendungsmöglichkeiten, z.B. Datei ist aus Prüfungsgründen gesperrt etc.

Die meisten auftragsorientierten Medien-Datenbanken bieten zusätzliche Funktionalitäten, wie z.B. die Möglichkeit Texte und Bilder aus Plattenplatz-Gründen automatisch auf externe Medien, z.B. DLT-Roboter, CD-Archive usw., zu archivieren und vom eigentlichen Plattenplatz zu löschen und umgekehrt bei Bedarf diese Texte und Bilder auch wieder rückzuarchivieren oder z.B. die Möglichkeit aus den Texten und Bildern der auftragsorienierten Medien-Datenbank andere Formate zu berechnen.

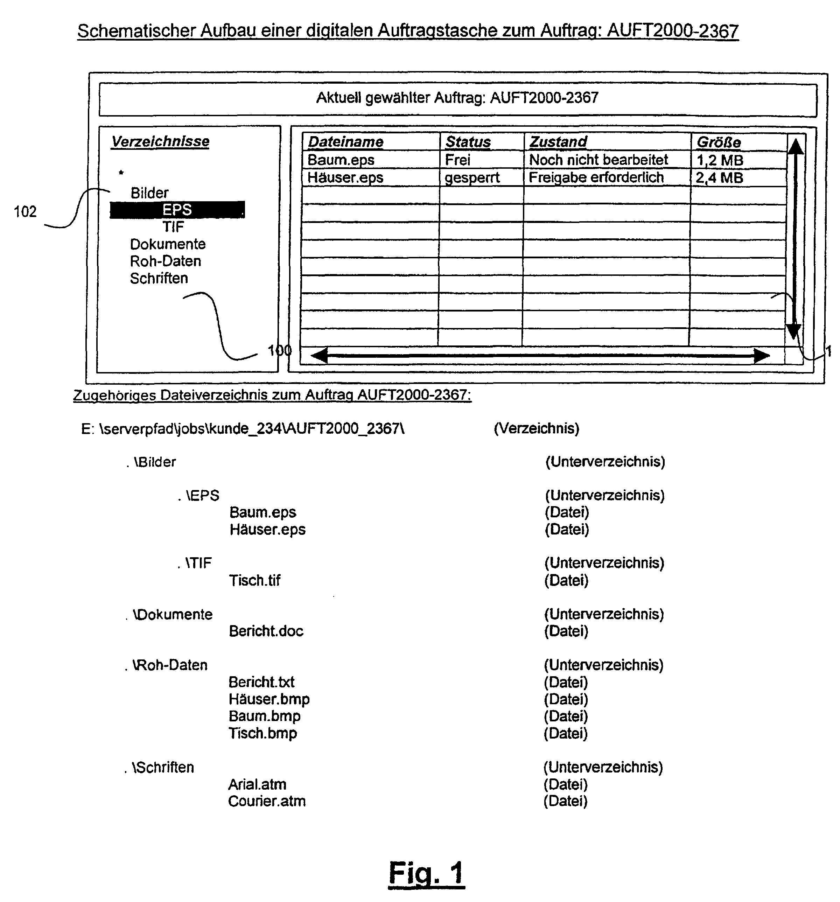

Die Nutzung solcher auftragsorientierten Medien-Datenbanken wird auf der Anwenderseite durch eine sogenannte digitale Auftragstasche (Figur 1) repräsentiert. Die **digitale Auftragstasche** ist einem bestimmten Auftrag zugeordnet und zeigt in der Regel listenhaft die datenbankseitig erfaßten Dateinamen inklusive Zusatzinformationen des dem Auftrag zugehörigen Dateiverzeichnisses.

Die bisherige Vorgehensweise zur Neuaufnahme, Löschung, Umbenennung bzw. zur Bearbeitung dieser Dateien erfolgte in der Regel direkt über die datenbankgestützten digitalen Auftragstaschen. Dies hatte natürlich ein Umlernen bei der Bearbeitung solcher Aufträge zur Folge und führte in der Regel nicht nur zu einer wesentlichen Zeitverzögerung, sondern auch oft zur Ablehnung solcher Systeme durch den Anwender, der gewohnt ist, mit seinem Anwendungsprogramm, etwa einem CAD-Programm, zu arbeiten. Ein weiterer Nachteil bestand natürlich auch in der Komplexität und Anfälligkeit der Schnittstellen zu den eigentlichen Anwendungsprogrammen, mit denen die Dateien des Auftrages bearbeitet wurden, da diese ja in irgendeiner Form in die Abwicklung mit der digitalen Auftragstasche integriert werden mußten.

Desweiteren hatte die bisherige Methode den Nachteil, daß wenn mehrere Anwender an ein und demselben Auftrag in einem lokalen Netzwerk arbeiteten, daß Änderungen, Neuaufnahmen, Löschungen von Dateien und Dateiverzeichnissen etc. erst nach einer manuellen Aktualisierung der digitalen Auftragstasche einem anderen Anwender sichtbar wurden.

In der US 6,052,514 ist ein computergestütztes System zur Koordination eines Publikationsprozesses etwa einer Zeitung oder einer Zeitschrift beschrieben. Um es mehreren Bearbeitern zu erlauben, über Computer gleichzeitig an der Publikation zu arbeiten, weist das Publikationssystem eine bestimmte Datenstruktur mit Textdaten, Bilddaten, Layoutdaten, Publikationsidentifikationsdaten, Publikationsdateinamendaten, Benutzeridentifikationsdaten und Publikationsstatusdaten auf. Ein Bearbeiter kann so auf bestimmte Daten zugreifen und diese bearbeiten, während ein anderer Bearbeiter gleichzeitig andere Daten bearbeiten kann. Das System erzeugt außerdem einen Statusbericht, anhand dessen sich die Bearbeiter über den momentanen Status der Publikation informieren können.

Es ist daher eine Aufgabe der vorliegenden Erfindung, die Nachteile im Stand der Technik zu vermeiden und ein verbessertes Verfahren zur Speicherung und Bearbeitung auftragszugeordneter Daten vorzuschlagen.

### ZUSAMMENFASSUNG DER ERFINDUNG

Die vorliegende Erfindung schlägt ein Verfahren zur Speicherung von Auftragsund/oder Kundendaten in einem Datenbanksystem vor, welches die Schritte aufweist:
Bereitstellung von Auftrags-Datensätzen (digitalen Auftragstaschen) für einem Auftrag und/oder Kunden zugeordneten Daten,
Bereitstellung eines Dateiverzeichnisses der in den Auftrags-Datensätzen enthaltenen Daten, und
Erzeugung einer bidirektionalen Verknüpfung der in den Auftrags-Datensätzen enthaltenen Dateien mit dem Dateiverzeichnis derart, dass die in den Auftrags-Datensätzen enthaltenen Dateien über das Dateiverzeichnis zugreifbar sind, und
Erfassung von Dateioperationen im Dateiverzeichnis und Aktualisierung der Daten im zugehörigen Auftrags-Datensatz.

Das erfindungsgemäße Verfahren hat den Vorteil, daß das dateispezifische Agieren mit Dateien und Dateiverzeichnissen eines digitalen Auftrages, das heißt Neuanlegen, Bearbeiten, öffnen, Umbenennen und Löschen von Dateien und Dateiverzeichnissen in dem zugeordneten Dateiverzeichnis des Auftrages nicht mehr wie bisher über die digitale Auftragstasche, sondern direkt im Dateiverzeichnis erfolgen kann. Dies hat zur Folge, daß zum einen ein Umlemen des Anwenders bei der Bedienung bzw. beim Umgang mit Auftragsdateien und den zur Bearbeitung notwendigen Anwendungsprogrammen nicht mehr notwendig ist. Dadurch steigt nicht nur die Akzeptanz bei der Einführung solcher Produktionssysteme, sondern auch die Schnittstellen-Probleme bei der Integration der Anwendungsprogrammen zur Bearbeitung der Auftragsdateien werden vermieden.

Ein weiterer Vorteil kommt der gleichzeitigen Bearbeitung von Aufträgen in lokalen Netzwerken zu. Denn durch die bidirektionale Kopplung des Dateiverzeichnisses eines zur Bearbeitung ausgewählten Auftrages werden die Dateiaktionen auch über das Netzwerk hinweg mit der Datenbank abgeglichen und somit haben alle Anwender den gleichen Stand und Sicht des Auftrages.

Die Erfindung betrifft weiterhin ein Computerprogramm gemäß beiliegendem Anspruch 11 sowie ein Datenbanksystem gemäß Anspruch 12.

Weitere vorteilhafte Ausgestaltungen der Erfindung ergeben sich aus den abhängigen Ansprüchen.

### KURZE BESCHREIBUNG DER ZEICHNUNGEN

Weitere Aufgaben, Merkmale und Vorteile der vorliegenden Erfindung werden aus der folgenden Beschreibung von bevorzugten Ausführungsbeispielen unter Bezugnahme auf die beiliegenden Zeichnungen deutlich, in denen:
- Figur 1: einen schematischen Aufbau einer digitalen Auftragstasche mit zugehörigem Dateiverzeichnis des Auftrages gemäß einem Ausführungsbeispiel der Erfindung zeigt;

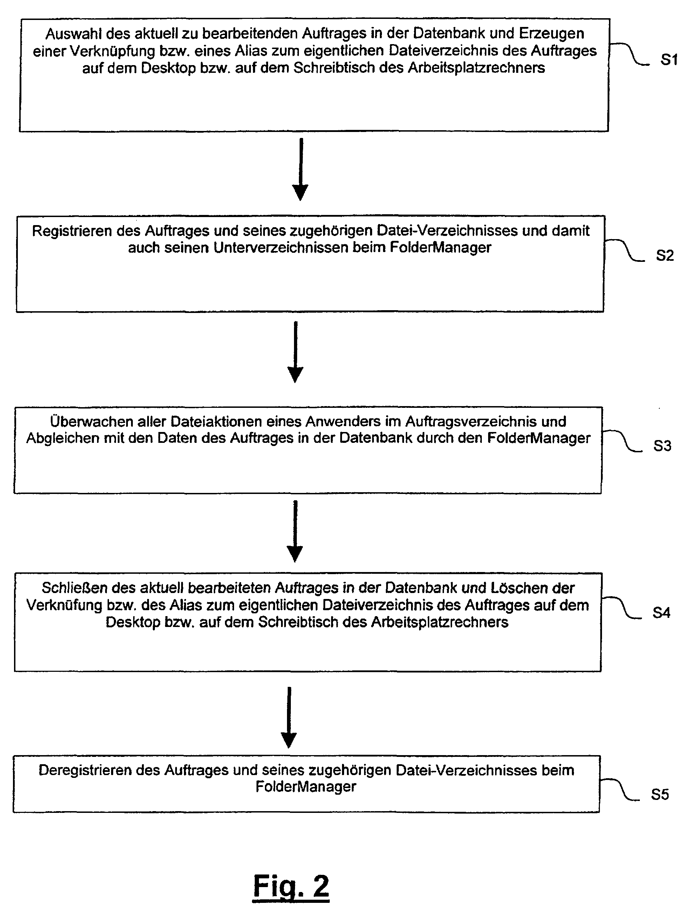

- Figur 2: ein Flußdiagramm zur Erläuterung der prinzipiellen Verfahrenschritte zur Herstellung einer bidirektionalen Verknüpfung zwischen Datenbank- und Dateisystem gemäß einem Ausführungsbeispiel der vorliegenden Erfindung zeigt;

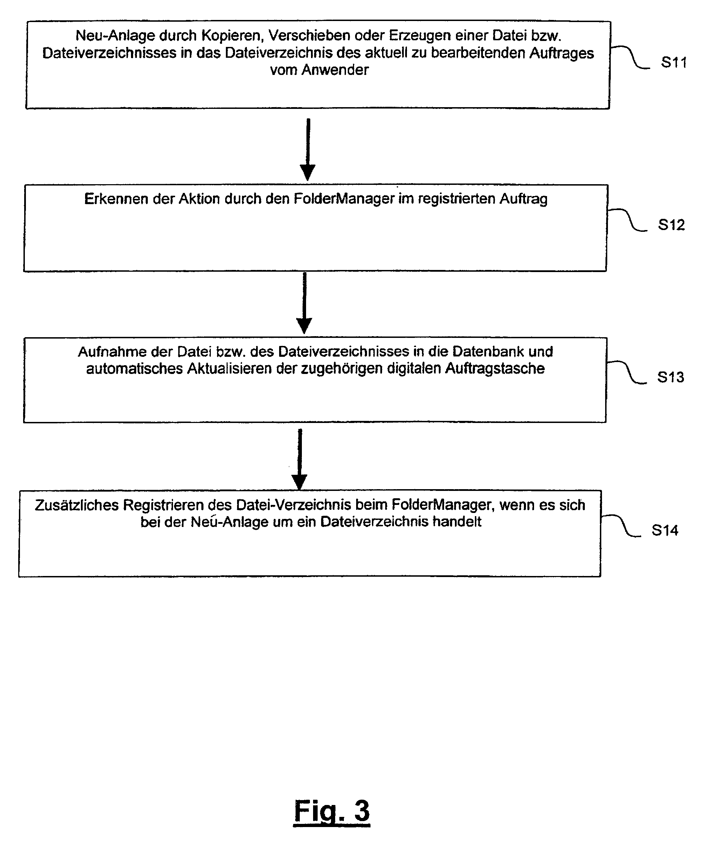

- Figur 3: ein Flußdiagramm zur Erläuterung der Verfahrenschritte zur Neuaufnahme einer Datei bzw. eines Dateiverzeichnisses in eine in einer Datenbank gespeicherte digitale Auftragstasche unter Verwendung der bidirektionalen Kopplung zwischen Datenbank- und Dateisystem gemäß einem Ausführungsbeispiel der vorliegenden Erfindung zeigt;

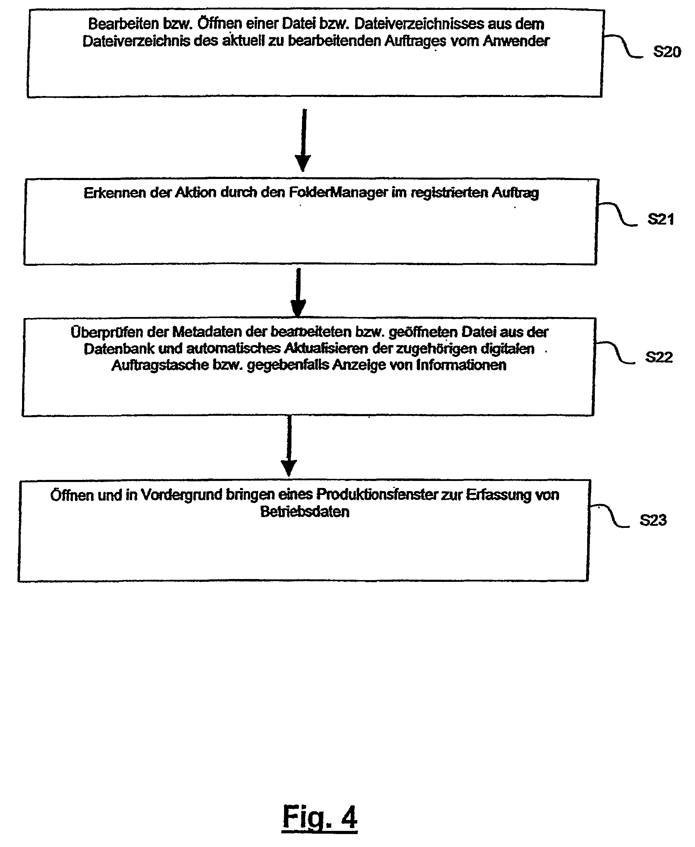

- Figur 4: ein Flußdiagramm zur Erläuterung der Verfahrenschritte zur Bearbeitung bzw. Öffnen einer Datei in einer digitalen Auftragstasche durch ein Anwendungsprogramm unter Verwendung der bidirektionalen Kopplung zwischen Datenbank- und Dateisystem gemäß einem Ausführungsbeispiel der vorliegenden Erfindung zeigt;

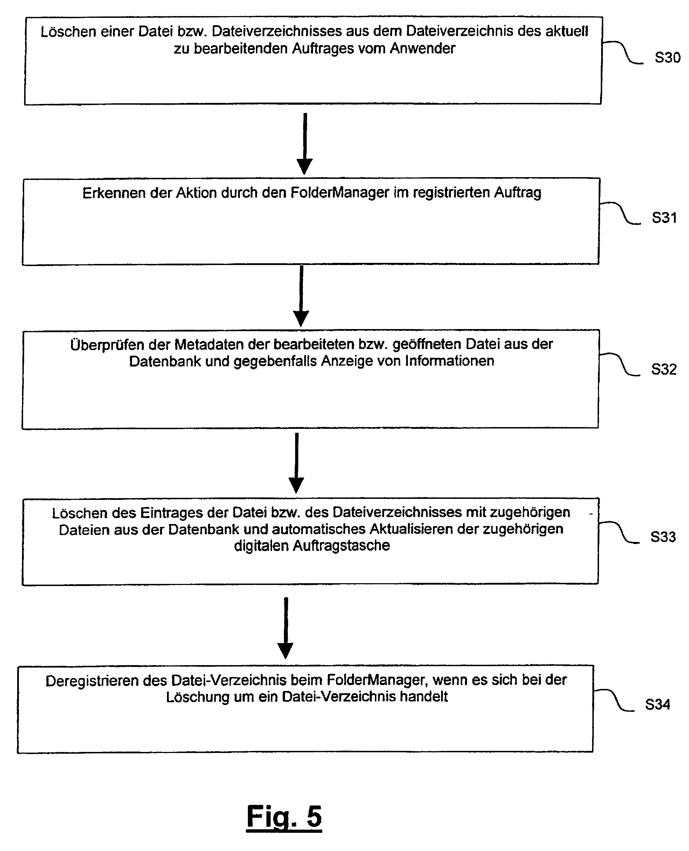

- Figur 5: ein Flußdiagramm zur Erläuterung der Verfahrenschritte zum Löschen einer Datei bzw. eines Dateiverzeichnisses aus einer digitalen Auftragstasche unter Verwendung der bidirektionalen Kopplung zwischen Datenbank- und Dateisystem gemäß einem Ausführungsbeispiel der vorliegenden Erfindung zeigt;

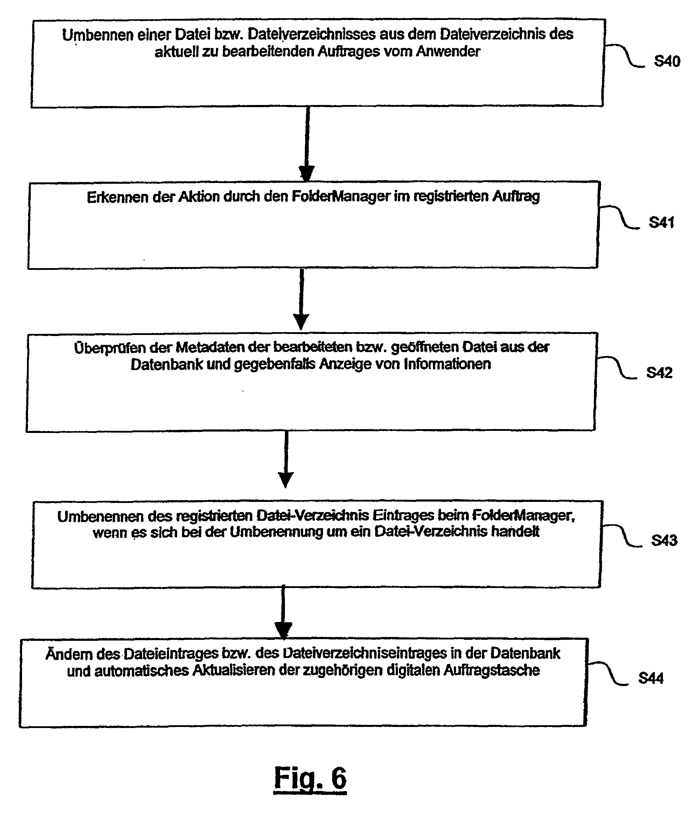

- Figur 6: ein Flußdiagramm zur Erläuterung der Verfahrenschritte zum Umbenennen einer Datei bzw. eines Dateiverzeichnisses aus einer digitalen Auftragstasche unter Verwendung der bidirektionalen Kopplung zwischen Datenbank- und Dateisystem gemäß einem Ausführungsbeispiel der vorliegenden Erfindung zeigt; und

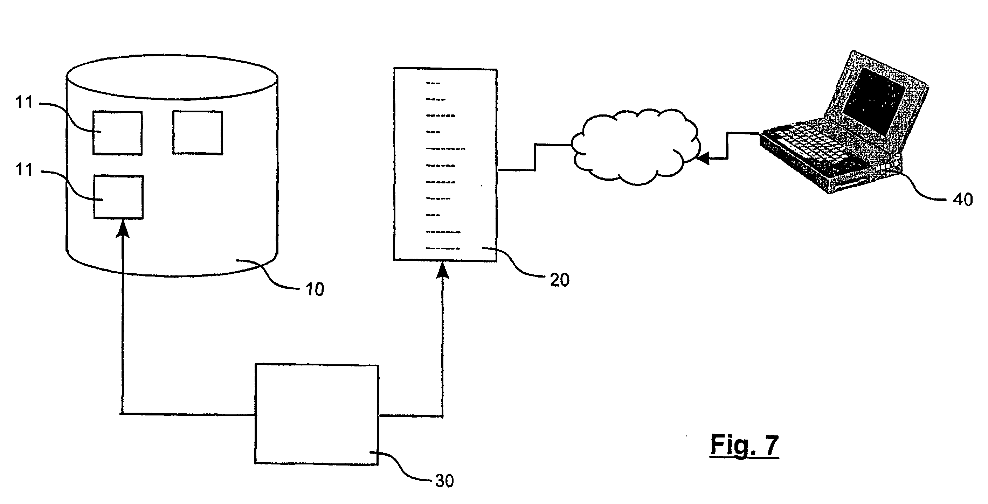

- Figur 7: eine schematische Darstellung eines Datenbanksystems gemäß einem Ausführungsbeispiel der vorliegenden Erfindung zeigt.

### DETAILLIERTE BESCHREIBUNG EINES AUSFÜHRUNGSBEISPIELS

Die Erfindung wird im folgenden unter Bezugnahme auf die Zeichnungen und anhand der erklärten Begriffe im Kapitel zum Stand der Technik im Detail erläutert. Weitere Begriffsdefinitionen werden im laufenden Text gegeben.

Figur 7 zeigt den schematischen Aufbau eines bevorzugten Ausführungsbeispiels des erfindungsgemäßen Datenbanksystems. Eine Datenbank 10, die durch jede geeignete Datenbank gebildet werden kann, enthält eine Vielzahl von Datensätzen bzw. digitalen Auftragstaschen 11, die später in Bezugnahme auf Figur 1 näher erläutert werden. Den in den Datensätzen 11 gespeicherten Daten, die üblicherweise auch Metadaten mit Zusatzinformationen enthalten, ist ein Dateiverzeichnis 20 zugeordnet, auf das ein Benutzer mittels seines Endgerätes 40 über sein Anwendungsprogramm, beispielsweise ein CAD-Programm oder Layout-Programm direkt zugreifen kann. Ein Folder-Manager 30 stellt eine bidirektionale Kopplung zwischen den digitalen Auftragstaschen 11 und dem jeweils zugehörigen Dateiverzeichnis 20 her. Eine Dateioperation eines Benutzers 40 im Dateiverzeichnis 20 wird über den Folder-Manager 30 unmittelbar auf die digitale Auftragstasche 11 übertragen. Die Dateiaktualisierung erfolgt quasi in Echtzeit, so dass ein weiterer Benutzer, der auf das Dateiverzeichnis des gleichen Datensatzes zugreift, immer das jeweils aktualisierte Dateiverzeichnis vorfindet.

Figur 1 zeigt den schematischen Aufbau einer digitalen Auftragstasche bzw. eines Auftrags-Datensatzes eines zuvor zur Bearbeitung ausgewählten Auftrages. Hier im Beispiel der Auftrag AUFT2000-2367. Auf der linken Seite werden aus der Datenbank die im Dateiverzeichnis des Auftrages enthaltenen Verzeichnisse (100) angezeigt. Auf der rechten Seite 101 sieht man die im aktuell markierten Verzeichnis 102 enthaltenen Dateien mit zusätzlichen Metadaten, wie zum Beispiel Status, Zustand und Größe. Die Metadaten können beliebige produktionspezifische Informationen zu einer Datei bzw. eines Dateiverzeichnisses eines Auftrages enthalten. Das zugehörige Dateiverzeichnis des Auftrages ist im unteren Teil der Figur 1 dargestellt.

Das erfindungsgemäße Verfahren ermöglicht nun durch die bidirektionale Kopplung des Datenbank- und des Dateisystems (Datenverzeichnisses) die Neuaufnahme, Bearbeitung, Löschung und Umbenennung von Dateien und Dateiverzeichnissen im aktuellen Auftrag der digitalen Auftragstasche unter Berücksichtigung von in der Datenbank liegenden Metadaten der Dateien, ohne daß der Anwender die Dateisystem-Ebene verlassen muß. Dies soll anhand der nachfolgend beschriebenen Verfahrensschritte gezeigt werden. Der Benutzer kann somit aus seinem Anwendungsprogramm, etwa einem CAD-Programm oder einem Layout-Programm direkt auf das Dateiverzeichnis seines Auftrages zugreifen.

Figur 2 illustriert die Verfahrensschritte zur Herstellung der bidirektionalen Verknüpfung zwischen Auftagsdatensätzen und zugehörigen Dateiverzeichnissen. In einem ersten Schritt S1 wird der zu bearbeitende Auftrag in einem Datenbanksystem ausgewählt. Gleichzeitig kann dies je nach Anwenderwunsch mit der Anzeige der zugehörigen digitalen Auftragstasche verbunden sein. Mit der Auswahl des Auftrages wird eine Verknüpfung (Windows PC-Schreibweise) bzw. ein Alias (Macintosh-Schreibweise) zu dem eigentlichen Dateiverzeichnis des Auftrages, welches in der Regel auf einem Dateiserver liegt, auf dem Desktop (Windows PC-Schreibweise) bzw. Schreibtisch (Macintosh-Schreibweise) erzeugt. Diese Verknüpfung bzw. Alias dient nur dem leichteren Auffinden des zugehörigen Dateiverzeichnis des ausgewählten Auftrages. So muß der Anwender das zum Auftrag zugehörige Dateiverzeichnis nicht umständlich in der Dateistruktur des Dateiservers suchen. Der Name der Verknüpfung bzw. des Alias kann z.B. die Auftragsnummer oder die Kurzbezeichnung des Auftrages enthalten.

Im Schritt S2 wird der Auftrag und das zugehörige Dateiverzeichnis mit allen eventuell bestehenden Unterverzeichnissen beim Folder-Manager registriert und damit in seine Überwachungs-Liste aufgenommen. Der Folder-Manager ist ein Agenten-Programm, welches auf dem Netzwerk-Server und den einzelnen Arbeitsplatzrechner als Hintergrund-Prozeß arbeitet. Er verwaltet die aktuelle Überwachungsliste der Datei-Verzeichnisse und koordiniert die Aktionen mit der Datenbank.

In Schritt S3 werden abhängig von den Dateiaktionen (Operationen) des Anwenders im Dateiverzeichnis des aktuell ausgewählten Auftrages die entsprechenden Schritte abgängig von der vom Anwender durchgeführten Dateiaktion durch den Folder-Manager in Verbindung mit der Datenbank durchgeführt.

Die Neuanlage bzw. Neu-Erzeugung einer Datei bzw. eines Dateiverzeichnisses durch Kopieren, Verschieben oder Erzeugen im aktuellen Dateiverzeichnis des ausgewählten und registrierten Auftrages in Schritt S 11 (Fig. 3) wird als Dateiaktion durch den Folder-Manager in Schritt S 12 erkannt. Dieser nimmt in Schritt S 13 die Datei bzw. das Dateiverzeichnis in die Datenbank des aktuellen Auftrages auf. Optional kann dem Anwender durch den Folder-Manager ein Fenster angezeigt werden, in dem er zusätzliche Metadaten, wie z.B. Status, Zustand der neuen Datei bzw. des neuen Dateiverzeichnisses eingeben bzw. auswählen kann. Sollte es sich um ein neues Dateiverzeichnis handeln, so wird dieses Verzeichnis in Schritt S 14 zusätzlich in die Überwachungsliste des Folder-Managers eingetragen.

Fig. 4 zeigt die Verfahrensschritte zum Bearbeiten bzw. Öffnen einer Datei. Bearbeitet oder öffnet der Anwender eine Datei im aktuellen Dateiverzeichnis des ausgewählten und registrierten Auftrages durch ein Anwendungsprogramm in Schritt S 20, so wird dies vom Folder-Manager in Schritt S 21 erkannt. Der Folder-Manager nimmt Verbindung zur Datenbank auf und evaluiert die rechtmäßige Bearbeitung der Datei anhand der Metadaten der Datei in Schritt S 22. Sollte die Aktion nicht berechtigt sein, weil z.B. die Datei oder das Dateiverzeichnis gesperrt ist, dann wird dem Anwender ein Hinweisfenster angezeigt. Der Folder-Manager verhindert die Weiterbearbeitung bis zur Schließung der Datei im Anwendungsprogramm. Sollte die Bearbeitung zulässig sein, dann kann dem Anwender in Schritt S 23 durch den Folder-Manager ein Erfassungfenster angezeigt werden, in dem er zusätzliche Metadaten, z.B. Status, Zustand oder Betriebsdaten, wie z.B. Kostenstelle etc. wählen bzw. eingeben kann.

Löscht der Anwender eine Datei bzw. ein Dateiverzeichnis im aktuellen Dateiverzeichnis des ausgewählten und registrierten Auftrages in einem Schritt S 30 (Fig. 5), dann wird dies durch den Folder-Manager in Schritt S 31 erkannt. Der Folder-Manager nimmt wiederum Verbindung zur Datenbank auf und evaluiert die rechtmäßige Löschung der Datei bzw. des Dateiverzeichnisses anhand der Metadaten in Schritt S 32. Sollte die Aktion nicht berechtigt sein, weil z.B. die Datei oder das Dateiverzeichnis gesperrt ist, dann wird dem Anwender ein Hinweisfenster angezeigt. Der Folder-Manager verschiebt die gelöschte Datei bzw. das gelöschte Dateiverzeichnis aus dem Papierkorb zurück zum eigentlichen Dateiverzeichnis und verhindert so ein Löschen. In Schritt S 32 wird bei rechtmäßiger Löschung auch der zugehörige Eintrag in der Datenbank gelöscht. Sollte es sich bei der Löschung um ein Dateiverzeichnis handeln, dann wird auch der zugehörige Eintrag in der Überwachungsliste des Folder-Managers in Schritt S 34 entfernt.

Wird eine Datei bzw. ein Dateiverzeichnis im aktuellen Dateiverzeichnis des ausgewählten und registrierten Auftrages in Schritt S 40 umbenannt (Fig. 6), so wird auch diese Dateisystem-Aktion vom Folder-Manager im Schritt S 41 erkannt. Der Folder-Manager nimmt wiederum Verbindung zur Datenbank auf und evaluiert die rechtmäßige Umbenennung der Datei bzw. des Dateiverzeichnisses anhand der Metadaten in Schritt S 42. Sollte die Aktion nicht berechtigt sein, z.B. weil die Datei oder das Dateiverzeichnis gesperrt ist, dann wird dem Anwender ein Hinweisfenster angezeigt. Der Polder-Manager veranlaßt dann das Rückumbenennen der Datei bzw. des Dateiverzeichnisses und verhindert so ein Umbenennen. In Schritt S 44 wird bei rechtmäßiger Umbenennung auch der zugehörige Eintrag in der Datenbank geändert. Sollte es sich bei der Umbenennung um ein Dateiverzeichnis handeln, dann wird auch der zugehörige Eintrag in der Überwachungsliste des Folder-Managers in Schritt S 43 geändert.

Mit dem Schließen des aktuell zu bearbeitenden Auftrages in der Datenbank in Schritt S4 (siehe Fig. 2) werden gleichzeitig die Einträge in der Überwachungsliste des FolderManagers für den zugehörigen Auftrag entfernt und die Verknüpfung bzw. der Alias zum eigentlichen Dateiverzeichnis des Auftrages auf dem Desktop bzw. auf dem Schreibtisch des Arbeitsplatzrechners in Schritt S5 gelöscht.

## Patentansprüche

1. Verfahren zur Speicherung von Auftrags- und/oder Kundendaten in einem Datenbanksystem, aufweisend die Schritte:
(a) Bereitstellung von einem oder mehreren Auftrags-Datensätzen (11) zur Speicherung von einem Auftrag und/oder Kunden zugeordneten Daten,
(b) Bereitstellung eines Dateiverzeichnisses (20) der in den Auftrags-Datensätzen (11) enthaltenen Dateien, und
(c) Erzeugung einer bidirektionalen Verknüpfung der in den Auftrags-Datensätzen (11) enthaltenen Dateien mit dem Dateiverzeichnis (20) derart, dass die in den Auftrags-Datensätzen enthaltenen Dateien über das Dateiverzeichnis zugreifbar sind, und
(d) Erfassung von Dateioperationen im Dateiverzeichnis und Aktualisierung der Daten im zugehörigen Auftrags-Datensatz.

2. Verfahren nach Anspruch 1, wobei der zu einem Auftrag zugehörige Auftrags-Datensatz in dem Datenbanksystem (10) zusätzlich Metadaten enthält, die Dateiformat, Dateigrößen, Bearbeitungsstatus und/oder Zugriffsstatus der enthaltenen Dateien usw. angeben können.

3. Verfahren nach Anspruch 2, wobei im Schritt (d) die Datenaktualisierung auch die Metadaten umfaßt.

4. Verfahren nach einem der Ansprüche 1 bis 3, wobei in Schritt (d) die Datenaktualisierung unmittelbar bei geöffnetem Dateiverzeichnis und/oder Auftrags-Datensatz erfolgt, so dass ein weiterer Benutzer Zugriff auf die jeweils aktualisierten Dateien und Metadaten im Dateiverzeichnis hat.

5. Verfahren nach einem.der Ansprüche 1 bis 4, wobei Verfahrensschritt (d) als Hintergrundprozess abläuft.

6. Verfahren nach einem der Ansprüche 1 bis 5, wobei das Datenbanksystem eine Medien-Datenbank zur Speicherung von Bilddaten, Textdaten, CAD-Daten usw. ist.

7. Verfahren nach einem der Ansprüche 1 bis 6, wobei das Dateiverzeichnis (20) auf einem Netzwerk-Server zum Benutzerzugriff über ein digitales Kommunikationsmedium installiert ist.

8. Verfahren nach einem der Ansprüche 1 bis 7, wobei die Dateioperationen in Verfahrensschritt (d) das Neuanlegen, Bearbeiten, Umbenennen und Löschen von Daten im Dateiverzeichnis eines Auftrages oder Kunden umfassen.

9. Verfahren nach einem der Ansprüche 1 bis 8, weiterhin aufweisend den Schritt der Bereitstellung einer Verknüpfung auf einer Benutzerschnittstelle zum Dateiverzeichnis (20) eines Auftrages oder Kunden.

10. Verfahren nach einem der Ansprüche 1 bis 9, weiterhin aufweisend den Schritt der Ausgabe eines Hinweises an den Benutzer, der eine unzulässige Dateioperation im Dateiverzeichnis ausführen möchte.

11. Computerprogramm enthaltend Programmcode zur Ausführung des Verfahrens nach einem der Ansprüche 1 bis 10.

12. Datenbanksystem enthaltend:
- eine Datenbank (10) zur Speicherung mehrerer Auftrags-Datensätze (11), die einem Auftrag und/oder einem Kunden zugeordnete Daten enthalten,
- ein Dateiverzeichnis (20) der in den Auftrags-Datensätzen (11) enthaltenen Dateien, und
- einen Folder-Manager (30) zur bidirektionalen Verknüpfung der in den Auftrags-Datensätzen (11) enthaltenen Dateien mit dem Dateiverzeichnis (20) derart, dass ein Zugriff auf die in den Auftrags-Datensätzen enthaltenen Dateien über das Dateiverzeichnis (20) ermöglicht ist und zur Erfassung von Dateioperationen im Dateiverzeichnis (20) und zur Aktualisierung der Daten im zugehörigen Auftrags-Datensatz (11).

13. Datenbanksystem nach Anspruch 12, wobei ein Auftrags-Datensatz (11) weiterhin Metadaten der enthaltenen Dateien enthält, die Informationen über Dateigrößen, Dateiformate, Zugriffsstatus und Bearbeitungsstatus der Dateien in dem Datensatz usw. enthalten können.

14. Datenbanksystem nach Anspruch 12 oder 13, wobei auf das Datenbanksystem ein gleichzeitiger Zugriff durch mehrere Benutzer möglich ist.

15. Computersystem aufweisend ein Datenbanksystem nach einem der Ansprüche 12 bis 14.

## Claims

1. A method of storing order and/or customer data in a database system, the method comprising the steps of:
(a) providing one or more order data sets (11) for storing an order and/or customer-related data,
(b) providing a file directory (20) of the files contained in the order data sets (11), and
(c) generating a bidirectional link between the files contained in the order data sets (11) and the file directory (20) such that the files contained in the order data sets can be accessed through the file directory, and
(d) recording file operations in the file directory and updating the files in the associated order data set.

2. The method according to claim 1, wherein in the database system (10) the order data set associated with an order additionally contains metadata that may be indicative of the file format, file sizes, the processing status and/or the access status of the contained files.

3. The method according to claim 2, wherein the updating of data in step (d) also comprises said metadata.

4. The method according to one of claims 1 to 3, wherein the updating of data in step (d) is carried out immediately in the opened file directory and/or order data set so that another user has access to the correspondingly updated files and metadata in the file directory.

5. The method according to one of claims 1 to 4, wherein method step (d) is carried out as a background process.

6. The method according to one of claims 1 to 5, wherein the database system is a media database for storing image data, text data, CAD data etc.

7. The method according to one of claims 1 to 6, wherein the file directory (20) is installed on a network server for access by a user through a digital communication medium.

8. The method according to one of claims 1 to 7, wherein the file operations in method step (d) comprise creating, processing, renaming, and deleting data in the file directory of an order or customer.

9. The method according to one of claims 1 to 8, further comprising the step of providing a link to the file directory (20) of an order or customer at a user interface.

10. The method according to one of claims 1 to 9, further comprising the step of outputting a message to a user intending to carry out an illegal file operation in the file directory.

11. A computer program containing program code for carrying out the method according to one of claims 1 to 10.

12. A database system comprising:
- a database (10) for storing a plurality of order data sets (11) containing data related to an order and/or a customer,
- a file directory (20) of the files contained in the order data sets (11), and
- a folder manager (30) for bidirectionally linking the files contained in the order data sets (11) to the file directory (20) such that access to the files contained in the order data sets is possible through the file directory (20), and for recording file operations in the file directory (20) and updating the data in the associated order data set (11).

13. The database system according to claim 12, wherein an order data set (11) further comprises metadata of the contained data which may contain information on file sizes, file formats, the access status, and the processing status of the files in the file set etc.

14. The database system according to claim 12 or claim 13, wherein a plurality of users can access the database system simultaneously.

15. A computer system comprising a database system according to one of claims 12 to 14.

## Revendications

1. Procédé de mémorisation de données d'un ordre et/ou d'un client dans un système de base de données, comportant les étapes suivantes:
(a) mise à disposition d'un ou de plusieurs article(s) de données d'ordre (11) pour la mémorisation de données associées à un ordre et/ou un client,
(b) mise à disposition d'un répertoire (20) des fichiers contenus dans les articles de données d'ordre (11), et
(c) génération d'une liaison bidirectionelle entre les fichiers contenus dans les articles de données d'ordre (11) et le répertoire des fichiers (20) de façon que les fichiers contenus dans les articles de données d'ordre (11) sont accessibles par l'intermédiaire du répertoire des fichiers (20), et
(d) saisie d'opérations de fichiers dans le répertoire des fichiers (20) et mise à jour des données dans l'article de données d'ordre (11) associé.

2. Procédé selon la revendication 1, **caractérisé en ce que** dans le système de base de données (10), l'article de données d'ordre (11) associé à un ordre comporte en plus des métadonnées indiquant le format de fichier, la taille de fichier, l'état de traitement et/ou l'état d'accès etc. des fichiers contenus.

3. Procédé selon la revendication 2, **caractérisé en ce que** lors de l'étape (d) la mise à jour des données comporte également les métadonnées.

4. Procédé selon une quelconque des revendications 1 à 3, **caractérisé en ce que** lors de l'étape (d) la mise à jour des données est effectuée instantanément en laissant ouvert le répertoire des fichiers (20) et /ou l'article de données d'ordre, de façon qu'un utilisateur additionnel peut accéder aux fichiers et métadonnées respectivement mis à jour dans le répertoire des fichiers.

5. Procédé selon une quelconque des revendications 1 à 4, **caractérisé en ce que** l'étape (d) est exécutée en arrière-plan.

6. Procédé selon une quelconque des revendications 1 à 5, **caractérisé en ce que** le système de base de données est une base de données média pour la mémorisation de données graphiques, données texte, données CAO etc.

7. Procédé selon une quelconque des revendications 1 à 6, **caractérisé en ce que** le répertoire des fichiers (20) est installé sur un serveur réseau pour l'accès par un utilisateur par l'intermédiaire d'un moyen de communication digital.

8. Procédé selon une quelconque des revendications 1 à 7, **caractérisé en ce que** les opérations de fichiers lors de l'étape (d) comprennent créer, traiter, renommer et effacer des données dans le répertoire des fichiers d'un ordre ou d'un client.

9. Procédé selon une quelconque des revendications 1 à 8, **caractérisé en ce qu'**il comprend en plus une étape de mise à disposition sur un interface utilisateur d'une liaison au répertoire des fichiers (20) d'un ordre ou d'un client.

10. Procédé selon une quelconque des revendications 1 à 9, **caractérisé en ce qu'**il comprend en plus une étape de sortie d'une indication à un utilisateur essayant d'effectuer une opération interdite dans le répertoire des fichiers.

11. Logiciel, comportant un code de programme pour exécuter le procédé selon une quelconque des revendications 1 à 10.

12. Système de base de données, comportant:
- une base de données (10) pour la mémorisation de plusieurs articles de données d'ordre (11) comportant des données associées à un ordre et/ou un client,
- un répertoire (20) des fichiers contenus dans les articles de données d'ordre (11), et
- un gestionnaire de dossiers (30) pour la liaison bidirectionnelle entre les fichiers contenus dans les articles de données d'ordre (11) et le répertoire des fichiers (20) de façon qu'un accès aux fichiers contenus dans les articles de données d'ordre est possible par l'intermédiaire du répertoire des fichiers (20) et pour la saisie d'opérations de fichiers dans le répertoire des fichiers (20) et pour la mise à jour des données dans l'article de données d'ordre (11) associé.

13. Système de base de données selon la revendication 12, **caractérisé en ce qu'**un article de données d'ordre (11) comporte en plus des métadonnées des fichiers contenus comportant des informations sur les tailles des fichiers, les formats des fichiers, l'état d'accès et l'état de traitement etc. des fichiers contenus dans cet article de données.

14. Système de base de données selon la revendication 12 ou 13, **caractérisé en ce qu'**il permet l'accès simultané au système de base de données par plusieurs utilisateurs.

15. Système d'ordinateur, comportant un système de base de données selon une quelconque des revendications 12 à 14.
